(19)

Europäisches
Patentamt
European
Patent Office
Office européen
des brevets

(11) **EP 3 205 512 B1**

(12) **EUROPEAN PATENT SPECIFICATION**

(45) Date of publication and mention
of the grant of the patent:
**13.06.2018   Bulletin 2018/24**

(51) Int Cl.:
***B42D 25/328*** *(2014.01)*

(21) Application number: **16154813.6**

(22) Date of filing: **09.02.2016**

(54) **OPTICAL SECURITY DEVICE**

OPTISCHE SICHERHEITSVORRICHTUNG

DISPOSITIF DE SÉCURITÉ OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.08.2017   Bulletin 2017/33**

(73) Proprietor: **CSEM Centre Suisse d'Electronique et
de
Microtechnique SA - Recherche et
Développement
2002 Neuchâtel (CH)**

(72) Inventors:
• **QUARANTA, Giorgio
68300 Saint-Louis (FR)**
• **BASSET, Guillaume
68330 Huningue (FR)**

(74) Representative: **Gevers SA
Rue des Noyers 11
2000 Neuchâtel (CH)**

(56) References cited:
**WO-A1-2015/096859**

## Description

## Technical Field

The invention relates to the field of optical security devices for the detection of fraudulent manipulation and counterfeit of valuable products and security documents. The invention is more particularly related to the field of optical security devices incorporating optical waveguides and optical grating couplers.

## Background of the invention

Counterfeiting is seriously damaging for the customers and for the industry as counterfeited products lose prestige and appeal, and brands can lose important amounts of their turnover due to fraudulent practices.

A particularly sensitive field where high level security devices are needed is the field of secured documents such as passports, identity cards, credit cards or banknotes. In this field a considerable number of authentication techniques and devices already exists. Most secured documents integrate several security devices, banknotes can integrate for example 20 different devices produced by various technologies. Security devices are often distinguished by the public who can control them and the instrumentation needed to perform this check. Devices that can be controlled with naked eye in common illumination conditions, or by a simple tactile touch, are referred to as level 1 security devices. The use of common authentication equipment such as portable UV lamps, portable magnifier, infrared lamp, laser pointer and the like are referred to as level 2 security devices, which will be checked and authenticated by a narrower public. Devices requiring dedicated or laboratory equipment to be checked and authenticated, such as a microscope, a DNA analyzer are referred to as level 3 (expert) and sometimes level 4 (forensics) security elements. Level 2, 3 or 4 security devices may require a specific knowledge, such as intentional mistake in printed decors, hidden features and the like, while level 1 security devices are self-intuitive and require no training or equipment to be controlled.

Complex authentication devices often comprise (generally) optically variable devices (OVDs) or generically holograms. Authentication devices of this type are based on the diffraction of light by gratings and need to be observed under different viewing angles in order to verify their authenticity. These diffractive elements produce three dimensional images, colour variations or animation (kinematic) effects, which depend on the angle of observation. They are primarily designed for level 1 authentication but can also encompass higher levels of security devices, to be checked on the basis of predetermined criteria or rules and sometimes with specific equipment. Many advanced and highly secured security devices need dedicated detection and image processing techniques and/or experience, which is barrier to their usage because of the equipment and/or the training required.

As counterfeiters constantly acquire new skills and technology, more and more complex solutions are put in place in secured documents. Holograms and other similar devices are widely used as optical security devices, but they become more and more easily copied by alternative devices creating substantially the same color and/or 3 dimensional visual effects or security information to be displayed. Also, most optical security devices produce different images when illuminated from different angles, what makes prediction of the expected control image in a real situation where the illumination conditions can vary very difficult. An example of such a device is described in WO 2012131239, wherein the appearance of the diffracting hologram changes considerably with the illuminated angle. As the appearance of the hologram changes upon the illumination conditions it is difficult to realize reliable image recognition algorithms. A particular property of all existing level 1 optical security systems is that their presence is difficult to be hidden from the viewer because they must be self-explanatory.

Nowadays, electronic devices such as smartphones, tablets, laptops, smart watches, smart glasses and other type of wearable electronics are well spread among consumers. Such devices can be referred to as consumer opto-electronic devices. New security devices designed to be controlled by means of such consumer opto-electronic devices have been proposed. On one side, several devices propose securing labels, products or secured documents using radio-frequency communicating chips, such as RFID and NFC chips. Such technology enables both authentication and identification functionalities. On the other side, new security devices try to benefit from the embedded high resolution camera and computing power of consumer opto-electronic devices to create new opto-digital authentication methods using dedicated opto-digital security elements and devices. In both cases, the connectivity of these devices can also be used for track and trace purposes and control reporting. The consumer optoelectronic devices can as well be used as a tool to guide and/or or automatize the authentication control by using embedded software, such as applications, or delocalized such as webpages and server interactions. An example of such device is the Optical Smart Solutions™ developed by Hologram Industries, now SURYS (http://surys.com/surys-optical-smart/).

In a few cases, these opto-digital security elements are also using the flash lamp of such consumer electronic devices in order to take pictures or videos under ambient illumination and with a direct flash illumination, such as presented in the document WO 2012131239 A1. However, such features are visual features based on holograms and are very visible by the naked eye, which have be adapted to be more easily machine readable and authentified. In some cases, a magnifier adapted to a consumer opto-electronic device allows the reading of microscopic features that are barely visible or are invisible to the naked eye, or to the consumer opto-electronic devices without this magnifier.

Such consumer opto-electronic devices are so wide-spread that security devices designed for the authentication of documents and goods using these tools can almost be considered as level 1. As a parallel, the identification function and connectivity to consumer is widely done using 2 dimensional bar code, called datamatrix, such as QR-codes that most people will recognize and read with a consumer opto-digital device. Such security devices that can be red and checked by the general public are the most controlled, and therefore the most counterfeited or imitated ones, and also the most valuable.

Very high level security devices may be realized by incorporating in optical security devices laminated structures that comprise resonating waveguide gratings that may produce surprising color effects. The basic technology was created in the 1980s and is disclosed as an example in US 4426130 and is still resistant to counterfeiting today. These difficult to reproduce resonant waveguide-grating elements increase the complexity of such security devices and are visually distinctive by machine vision or human eye, preventing forging of the documents or products to be secured. However, they are limited to observation in direct specular reflection of direct transmission.

In an attempt to improve the uniqueness of displayed color effects and to overcome the limitation of observing the security device only in direct specular reflection or direct transmission, document WO 2015096859 A1, which discloses an optical security device according to the preamble of claim 1, describes an optical security device based on a plurality of resonating waveguide gratings. The different waveguide-gratings are cross-exchanging light coupled in the leaky-mode waveguide allowing light redirection out of the direct specular reflection or direct transmission. In different embodiments, 2D arrays of such elementary grating structures are disclosed in this document. Inserting a security element made of such elementary grating structures in a detection system is disclosed as well, allowing to analyze the spectral distribution of outcoupled beams of the security device. The device disclosed in WO 2015096859, is designed to be checked by naked eye, or so that a spectral analysis of its outcoupled beams is made when it is inserted in a system allowing such spectral analysis. Such device, while very secured, suffer from the same drawbacks and limitations as the diffractive holograms in that their appearance is heavily dependent upon the illumination angle, which makes their appearance totally dependent of the illumination condition. It is not possible to predict the appearance of such devices, even when observed from the exact same angle if the illumination conditions vary. Finally, the device disclosed in WO 2015096859 A1 is not particularly suited to display security information provided on curved surfaces which may be necessary on curved shaped objects to be secured.

An aim of the present invention is therefore to provide a perfectly unambiguous level 1 authentication device which does not suffer the disadvantages of the prior art device. More specifically an aim of the present invention is to propose a security device, the appearance of which can be perfectly predicted, in particular at many different illumination angles in a standard room containing various light sources.

## Summary of the invention

The object of the invention is to overcome at least partially the limitations of the anti-counterfeit optical devices described in the prior art. In particular the invention provides an optical security device displaying bright color images that may be obtained only for a specific distance of an illumination source and for a specific distance of a detector, or imaging system, relative to said optical security device. More particularly, when said specific distance of said illumination source and said detector is not met, the optical security device remains substantially invisible to a detector or the human eye.

To this end, the present invention provides an optical security device comprising:

- a substrate layer;

- a low-mode waveguide layer arranged on said substrate layer, said waveguiding layer defining a first waveguide surface on the substrate layer and defining a second waveguide surface opposite to said first waveguide surface;

- a coating layer arranged on said second waveguide surface.

The waveguiding layer comprises at least two resonating waveguide grating elements, each having less than 4 possible guided lightwave modes, each at least two resonating waveguide grating elements comprising a first grating and a second grating in the first waveguide surface and further comprising a third grating and a fourth grating arranged in the second waveguide surface opposite the first grating and the second grating respectively. As the waveguide is a low mode waveguide, therefore having a low thickness that has a subwavelength dimension, incident light on said first and third grating operate as a single waveguide-grating. Similarly, as the waveguide has a subwavelength thickness, the incident light on said second and fourth grating operate as a single waveguide-grating. In addition the first grating defines a first surface portion having a first center and the second grating defines a second surface portion having a second center, said first center and said second center defines a longitudinal waveguide axis W, and a resonating waveguide grating element center is defined halfway between said first center and said second center.

The first grating and third grating form a first resonating waveguide grating, also defined as a first pair of gratings. The second grating and fourth grating form a second resonating waveguide grating, also defined as a second pair of gratings. Because the thickness of the waveguide is much smaller than the wavelength of the light to be incoupled by said first and second resonating waveguide, the diffraction effect of said first resonating waveguide grating would be the same if it would comprise respectively only one of said first grating or said third grating. For the same reason the diffraction effect of said second resonating grating would be the same if it would comprise respectively only one of said second grating or said fourth grating.

Said first grating and said third grating are arranged to be in optical communication with said second grating and said third grating such that, upon illumination with a light source:

- said first grating and said third grating couples into said resonating waveguide grating element at least a first incoupled portion of a first incident light beam, and so that said second grating couples out of said resonating waveguide grating element an outcoupled fraction of said at least first incoupled portion;

- said second grating and said fourth grating couples into said resonating waveguide grating element at least a second incoupled portion of a second incident light beam and so that said first grating couples out of said resonating waveguide grating element an outcoupled fraction of said at least second incoupled portion,

- said outcoupled fractions of said at least first and second incoupled portions having each a predetermined wavelength A and a predetermined spectral width $\Delta\lambda$.

According to the present invention, the optical security device further comprises:

- an illumination center and a detection center, defining an X-axis;

- a waveguiding layer center, in the waveguiding layer, located closest to a midpoint between said light source center and said detector center, said waveguiding layer center and said midpoint define a Z- axis, the normal to the plane defined by the X and Z axes passing by said midpoint and defining a Y axis;

The center of each of said at least two resonating waveguide grating elements are arranged on opposite sides of at least a first nonlinear curve, defined in the plane of said waveguiding layer and away from said waveguiding layer center, and so that said outcoupled fraction of said at least first incoupled portion or said outcoupled fraction of said at least second incoupled portion propagate towards the detector center.

In an embodiment said at least one set of said non intersecting curves is the intersection one of a set of confocalprolate spheroids with said waveguiding layer , the foci of at least one of said set of confocalprolate spheroids being substantially said illumination center, respectively substantially said detection center.

In an embodiment said at least one of said outcoupled fraction of said at least first incoupled portion or said at least outcoupled fraction of said at least a second incoupled portion is propagating in the fundamental mode of the waveguiding layer.

In an embodiment said predetermined wavelength A is comprised between 380nm and 1600 nm and in that said predetermined spectral width $\Delta\lambda$ defined relative to the halve intensity of said outcoupled fractions is between 1nm and 100nm, preferably between 10nm and 80nm, more preferably between 15 nm and 60 nm .

In an embodiment said first grating and said second grating are separated by a non-structured waveguide portion. A non-structured waveguide portion means a waveguide portion which does not comprise a grating structure.

In an embodiment, the waveguiding layer of said resonating waveguide grating element is a substantially transparent dielectric material. The refractive index of the waveguiding layer is substantially higher than the refractive indexes of the substrate layer and coating layer.

In an embodiment the waveguiding layer of said resonating waveguide grating element is a metallic resonating waveguide grating element.

In an embodiment, at least two further resonating waveguide grating elements are arranged on at least a second non-linear curve not intersecting with said first non-linear curve, the center of each of said further resonating waveguide grating elements being located on said at least second non-linear curves.

In an embodiment at least one of said outcoupled fractions of a plurality of resonating waveguide grating elements are directed towards the detector center.

In an embodiment said optical security device has a substantially flat shape defined in a plane parallel to the X-Y plane and said first and second non-linear curves are non-confocal elliptical curves.

In an embodiment said optical security device has a curved shape defined by a polynome in the space defined by the X-Y-Z axes.

In an embodiment said optical security device has at least two subsets of at least two resonating waveguide grating elements, characterized in that each subset of at least two resonating waveguide grating elements have different illumination and/or detection centers, such as to create animated and/or multiple image effects.

The invention is also achieved by an optical security control system that comprises:

- an optical security device according to claim 1,

- at least one light source located substantially at said illumination center and adapted to provide, in operation, a light beam illuminating a predetermined area of said optical security device ,

- a detector located substantially at said detection center and being arranged to detect at least a reflected fraction of said light beam .

In an embodiment of said optical security control system, said substrate layer is positioned to the side of said incident light beam.

In an embodiment of said optical security control system, said coating layer is positioned to the side of said incident light beam.

In an embodiment, the optical security control system comprises at least one spacer adapted to set a precise distance of said light source and said detector relative to said waveguiding layer center.

Another object of the invention relates to a product, in particular a document or goods comprising the optical security device of claim 1. In the context of the invention such product can consist in identity or fiduciary documents such as passports and the likes. It may also consist in any kind of valuable goods the authenticity and/or origin of which needs proofing, such as wine or spirit bottles, luxury goods, tobacco and aerosol generating products or pharmaceutical products.

## Brief description of the drawings

The invention will now be further described with reference to the following figures:

- Fig. 1a Illustrates an optical security device sensor adapted to a curved object to be secured;

- Fig.1b illustrates a cross section of an optical security device;

- Fig. 2 illustrates a resonating waveguide grating element illuminated by a light source and a detector receiving reflected light from the optical security element;

- Fig. 3a illustrates a top view of two configurations of a resonating waveguide grating element;

- Fig. 3b illustrates the cross section of a resonating waveguide grating element comprising a first grating and a second grating separated by a non structured waveguide portion;

- Fig. 3c illustrates the cross section of a resonating waveguide grating element comprising a first grating substantially adjacent to a second grating;

- Fig. 4 illustrates a cross sectional view of an optical security device arranged to an adaptation layer to an object to be secured, a light source illuminating the optical security device and a detector receiving light reflected off the optical security device;

- Fig. 5 illustrates an optical security device comprising a plurality of elliptical curves and a plurality of resonating waveguide grating elements;

- Fig. 6 illustrates an optical security device comprising a plurality of non-intersecting curves comprising each a plurality of resonating waveguide grating elements substantially oriented towards a center of a waveguiding layer;

- Fig.7 illustrates two prolate spheroids and the intersection between a plan and prolate spheroids;

- Fig. 8 illustrates a cross section of a prolate spheroid;

- Fig.9 illustrates the reference axes orientation of a resonating waveguide grating element in respect to the grating groove orientation.

## Detailed description

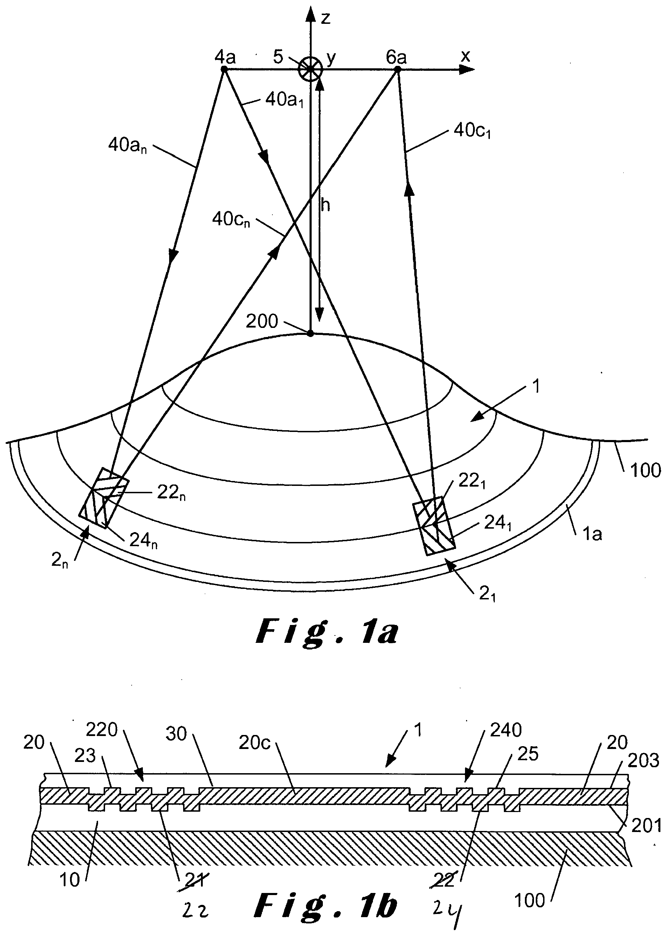

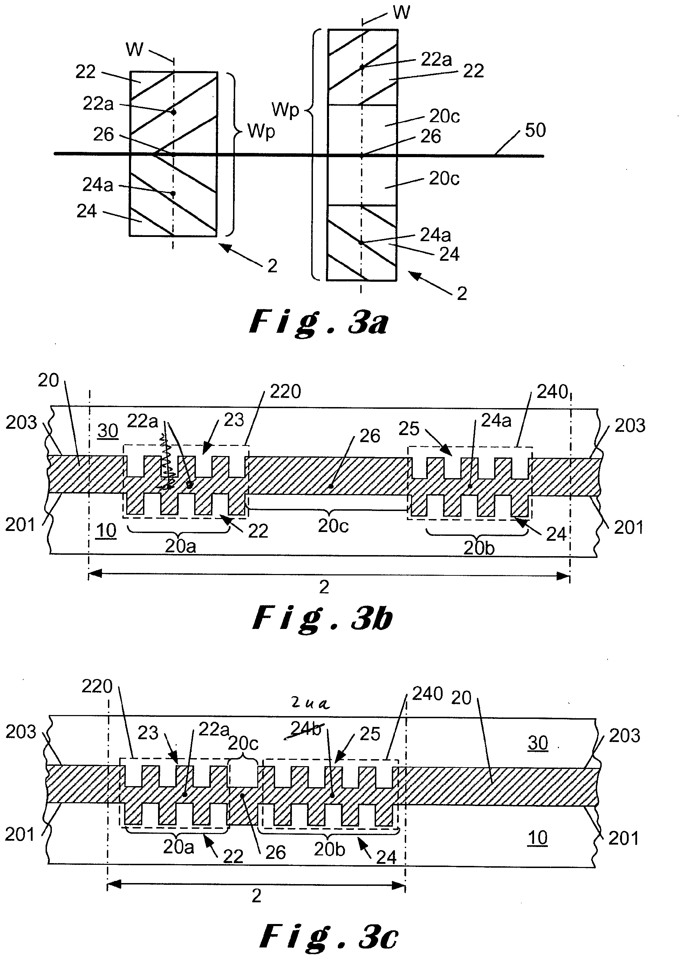

Fig.1a shows a preferred embodiment an optical security device 1 adapted on an object 100 having an arbitrary curved shape. As illustrated in Fig. 1b, Figures 3a-3c, the optical security device 1 comprises:

- a substrate layer 10;
- a waveguiding layer 20 arranged on said substrate layer 10. The waveguiding layer 20 is preferably deposited, printed or laminated on said substrate layer 10. Other techniques for fabricating the waveguide may be used as well, such as chemical or plasma etching or ion doping. The waveguiding layer 20 defines a first waveguide surface 201 of that waveguiding layer 20 which is on the substrate layer 10. The waveguiding layer 20 comprises also a second waveguide surface 203 which is opposite to said first waveguide surface 201.
- a coating layer 30 which is arranged on said second waveguide surface 203. The coating layer 30 is preferably deposited or printed to said waveguiding layer but may also be laminated on said waveguiding layer 20.

The optical security device 1, of which a cross section is shown in Fig. 1b, is preferably a substantially thin and flexible device, so that it may be easily curved to be adapted to either flat or curved areas of a document or an object, a good or a set of packaged goods to be secured. In order to secure a packaging containing a valuable good, such labels are often tamper evident labels, also called tamper evident stickers or tamper-proof labels, which allows the detection of any previous opening of the package. Said object 100 may be for example a security document or a good of which the origin has to be secured. It is understood here generally that an optical security device 1 is a device or document that essentially cannot be duplicated. The term " optical security device" conjures various concepts to the person skilled in the art, but it is generally characterized by the need of high tech, complex and expensive production machinery to fabricate such optical security devices, also called optical authentication and/or identification devices.

The optical security device 1 may have any shape such that its outer border 1a is preferably rectangular, or circular, or elliptical, or a bone shape, or any shape defined by a polynome. It can have inner cuts, preferably partial cuts, to favor its destruction when being delaminated. The optical security device 1 may be shaped so that it may be adapted to a cylindrical area or a spherical area, a bone shape area or an area that may be defined by a polygone in space or an area having one or two axis curvatures.

The substrate layer 10 is preferably a polymer layer on which at least two grating structures 22, 24 are realized. Preferably these grating structures 22, 24 are realized by an nano-imprint lithography technique which can be for example hot embossing or ultraviolet-casting in a roll-to-roll process. The gratings have typically a binary profile, also called rectangular profile, a sinusoidal profile, a cycloidal profile or a profile substantially close to one of these shapes, given loss of fidelity of replication of the nanostructures during mass-production. The ridge to grove height of the grating, also called depth of the grating, is typically in the range of 20nm to 150nm, preferably in the range of 40nm to 100nm, but can be varied between 5nm and 500nm for specific optimization and wavelength ranges.

The thickness of the substrate layer 10 typically smaller than 200 $\mu$m and is preferably between 5$\mu$m and 2mm, more preferably between 10$\mu$m and 1mm.

On top of the structured side of said substrate layer 10, i.e. on said first waveguide surface 201 comprising said first and said second gratings 22, 24, a very thin waveguiding layer 20 is adapted, preferably by a deposition technique, a printing technique or by a lamination technique. Typically physical vapor deposition can be used. This structured side forms said first waveguide surface 201. By depositing said waveguiding layer 20, a third 23 and fourth 25 grating is formed, each facing respectively said first grating 22 and said second grating 24. Said first grating 22 and said third grating 23 forms a first grating pair 220 and said second grating 24 and said fourth grating 25 forms a second grating pair 240. In case a printing technique would be used to deposit the waveguiding layer, the second surface 203 may have a lower corrugation than the first surface 201, or eventually be substantially flat. In any case, the resonant waveguide grating obtained would be able to couple resonantly specific modes and the waveguide-grating profile would only impact its coupling performances. In a preferred embodiment, the thickness of the waveguiding layer 20 is substantially homogeneous on a large part of the optical security device 1 because of the nature of the used deposition technique. Because of the substrate layer corrugation, such a waveguiding layer is non flat despite having a substantially homogenous thickness.

The waveguiding layer 20 is preferably made of a high refractive index dielectric. High refractive index dielectrics such as zinc sulfide or titanium dioxide, as well as their deposition techniques to obtain very thin films of homogenous thickness are widely known, especially in the security device industries in which they are broadly used. It has a thickness preferably between 5nm and 500nm, more preferably between 10nm and 200nm, more preferably between 15nm and 150nm, even more preferably between 20nm and 130nm. Other preferable materials for the waveguide materials are thin metal coating, such as thin films of aluminium, silver, gold, nickel, copper, platinum or their alloys. In a variant, the waveguiding layer can be done of two materials, such as two metals or a high refractive index and a metal.

As the thickness of the waveguiding layer 20 is much smaller than the wavelength of the light incident of said first 220 and said second 240 grating pair, the diffraction effects on these pairs 220, 240 is a bulk phenomenon in which both interfaces and the volume of the waveguiding layer 20 and the adjacent substrate 10 and coating layer 30 create the diffraction event. Therefore the first grating 22 and a second grating 24 cannot be isolated optically from the respectively third and fourth grating 23, 25. In is understood that in the general case, third and fourth gratings are present in all the embodiments of the invention. In a variant of all the embodiments of the invention said third 23 and said fourth 25 grating may be removed or constitute weakly corrugated surfaces, having a corrugation depth of less than 5nm.

Said waveguiding layer 20, also defined as waveguide, can also be made in a polymer matrix, a lacquer, a solgel or a curable resin having a relatively high refractive index compared to its surroundings, which may be realized example by incorporating high refractive index dielectric nanoparticles in the waveguide. In a variant, the waveguide can be realized by embedding a dielectric with a medium refractive index in a substrate layer and coating layer having relatively low refractive indexes. In another variant, the waveguide is made of a very thin metal layer allowing to guide light by plasmonic coupling on this waveguide, as for example disclosed for a continuously corrugated film in the document WO2013060817 disclosing an illumination configuration in total specular reflection.

As the optical security device 1 is mainly intended for visible light or near infrared light applications, the gratings structure elements of said first grating and said second grating are much smaller than the wavelength of the incident light. The structures and performances of typical resonating waveguide gratings are described for example in :

- http://arxiv.org/abs/1511.05543, in which the behavior of particular subwavelengths gratings (DID™) are described, as well as resonance waveguide gratings;
- http://dx.doi.org/10.1364/AO.32.002606, wherein the guided-mode resonance properties of planar dielectric waveguide gratings are presented and explained;
- http://dx.doi.org/10.1109/3.641320, and in http://dx.doi.org/10.1364/JOSAA.14.002985, wherein systematic analysis of resonant grating waveguide structures are made, in order to review the basic principles of resonant waveguide gratings as well as the efficient transfer of wave energy, by using a geometrical ray approach and coupled-wave models.

The waveguiding layer 20 comprises at least two resonating waveguide grating elements 2, each comprising a first grating pair 220 and a second grating pair 240. Said first grating pair 220 comprises a first grating structure and a third grating structure, also defined as first grating 22 and third grating 23. Said second grating pair 240 comprises a second grating structure and a fourth grating structure, also defined as respectively second grating 24 and fourth grating 25. The first grating 22 and a second grating 24 is realized in the first waveguide surface 201 and the third 23 and the fourth grating 25 is realized in the second waveguide surface 203, usually by the deposition of the waveguide. In a preferred case, said first and third gratings 22, 23 face each other and have both a similar shape because of the fabrication process which consists of depositing a layer on said first waveguide comprising said first grating 22. For the same reasons, said second and fourth grating 24, 25 are facing gratings having both a similar shape.

Said resonating waveguide grating elements 2 are defined as the pixels, defined also as colour pixels of said optical security element 1. The length Wp of a resonating waveguide grating is preferably between $2\mu m$ and $200\ \mu m$, preferably between $2\mu m$ and $100\ \mu m$, more preferable between $3\mu m$ and $50\mu m$. The width of said resonating waveguide grating elements 2, defined perpendicular to said length Wp, is preferably similar to said length Wp, but may be between a quarter of said length Wp and twenty times said length Wp. Said width is preferably between $2\mu m$ and $400\ \mu m$, more preferably between $3\ \mu m$ and $200\ \mu m$, even more preferably between $3\ \mu m$ and $100\ \mu m$.

As illustrated in Fig. 3a, said first grating 22 defines a first surface portion 20a having a first center 22a, which is preferably the geometrical center of said first surface portion 20a. The second grating 24 defines a second surface portion 20b having a second center 24a which is preferably the geometrical center of said first second portion 20b. Said first surface portion 20a and said second surface portion 20b are the surface portions of said waveguiding layer 20 through which a part of the incident light 40 on the optical security device 1 is incoupled and outcoupled.

Said first center 22a and said second center 24a define a longitudinal waveguide axis W, which defines the sense of the length of said resonating waveguide grating element 2. Also, a resonating waveguide grating element center 26 is defined halfway between said first center 22a and said second center 24a. As illustrated in Fig. 3a, said first grating pair 220 and said second grating pair 240 may be separated by a non structured waveguide portion 20c. In an advantageous embodiment, the length of said non structured portion 20c may be substantially zero so that said first grating 22 and said second grating 24 are adjacent gratings and may be substantially in contact, as illustrated in Fig.3c.

The geometrical configuration and the optical properties of said resonating waveguide grating elements 2 in the optical security element 1 is essential in the invention and will be described in detail here after.

Resonating waveguide gratings and their use in a color display device by exploiting the exchange of light between different resonating waveguide gratings have been described in detail by the applicant in the document WO2015096859 which is incorporated here in its entirety.

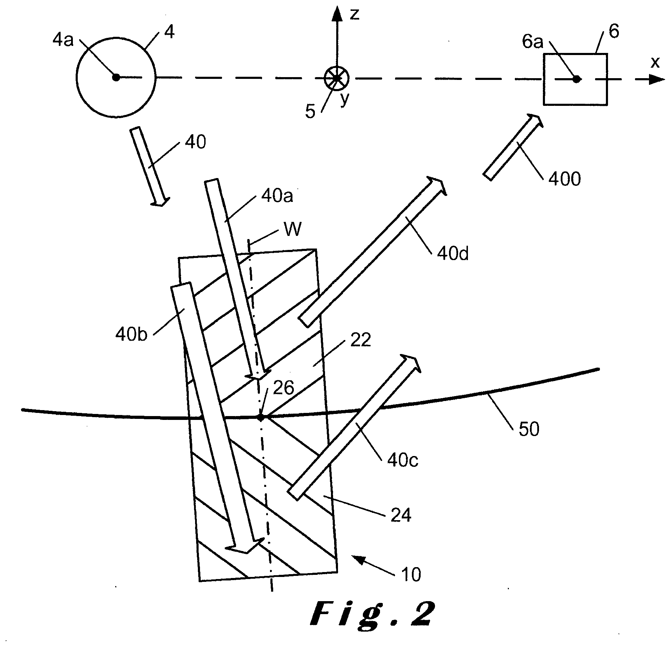

As illustrated in Fig. 2, said first grating pair 220 and said second grating pair 240 are arranged in optical communication such that, upon illumination by at least a portion of a light beam 40 provided by a light source,

- said first grating pair 220 couples into said resonating waveguide grating element 2 at least a first incoupled portion of a first incident light beam 40a, and so that said second grating pair 240 couples out of said resonating waveguide grating element 2 an outcoupled fraction 40c of said first incoupled portion;
- said second grating pair 240 couples into said resonating waveguide grating element 2 at least a second incoupled portion of a second incident light beam 40b and so that said first grating pair 220 couples out of said resonating waveguide grating element 2 an outcoupled fraction 40d of said second incoupled portion.

It is important to clarify here that resonating waveguide-gratings can incouple multiple modes in the waveguide as the incident light can be diffracted by a grating coupler at multiple positive or negative diffraction orders, and can therefore incouple various portions of light, possibly with different wavelength range and possibly travelling in substantially opposite directions. For example, for an angle of incidence near the local normal to the waveguiding layer, plus one and minus one diffracted modes will be coupled in opposite direction and have close wavelengths, typical central wavelength differences less than 30nm for the visible range. For a perfectly normal incidence on a resonant waveguide grating, two modes travelling in opposite direction with identical central wavelengths can be incoupled in the waveguide. As an example, a portion of the incident light beam can be diffracted at both the plus-one and minus-one order, or at the plus-one and plus-two order and the different portions can match a mode of the resonant-waveguide to be resonantly incoupled. So, for example, different modes may propagate from a first resonant waveguide grating element 2 to a further resonant waveguide grating element 2, but they will not match outcoupling conditions to be directed to the detector center 6a, unless said further resonant waveguide grating element is designed to couple a portion of the light provided by said first resonant waveguide grating element 2

Said first incoupled portion of a first incident light beam 40a and second incoupled portion of a second incident light beam 40b may have different intensities and different wavelengths and different spectral width, but not necessarily so. Similarly, the optical beams of said outcoupled fractions 40c, 40d may have different intensities and/or different optical apertures and/or different wavelengths and/or different spectral widths.

The optical security device 1 further comprises an illumination center 4a and a detection center 6a defining an X-axis, as illustrated in Fig.1a.

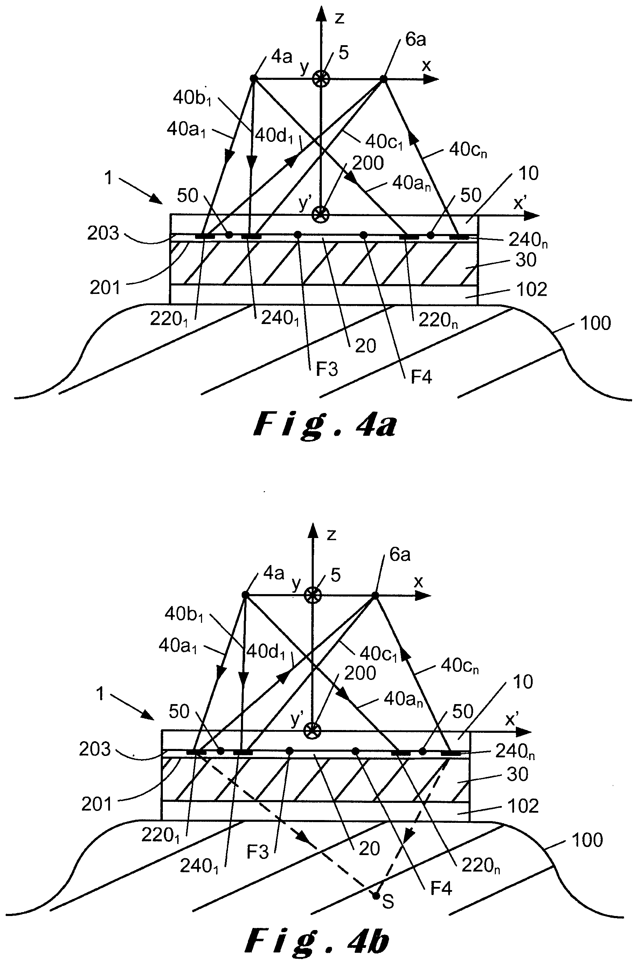

As illustrated in Fig. 1 and Fig. 4, the waveguiding layer 20 comprises a waveguiding layer center 200 being located closest to a midpoint 5 between said light source center 4a and said detector center 6a , said waveguiding layer center 200 and said midpoint 5 defining a Z- axis. A Y-axis is defined which passes through said midpoint 5 and which is perpendicular to the X-Z plane.

The center 26 of each resonating waveguide grating element 2 is arranged on a nonlinear curve 50, defined in the plane of said waveguiding layer 20 and away from said waveguiding layer center 200, and so that said outcoupled fraction 40c of said first incoupled portion and said outcoupled fraction 40d of said second incoupled portion propagate in the same direction and are both directed to be incident on a detector 6 positioned at said detector center 6a.

Said outcoupled fraction 40c outcoupled by said second grating 24 and said outcoupled fraction 40d of said first grating 22 may have different wavelengths and/or different spectral widths so that the combined light beams 400 of said outcoupled fractions 40c, 40d may be perceived as having the added colors of the lightbeams of said outcoupled fractions 40c, 40d. For example, said outcoupled fractions 40c and 40d may be red light beams having different central wavelength $\lambda$ or different spectral widths $\Delta\lambda$.

Two adjacent pairs of resonant waveguide grating elements may redirect different colored beams provided by the light source, their incoupled portions and outcoupled fractions having different central wavelength $\lambda$, for example one being substantially red while the other one being substantially a blue light beam so that the combined light beam comprising said two pairs of outcoupled fractions may be perceived or detected as a violet light beam, and so that this particular pair of resonating waveguide grating elements is perceived or detected as a violet pixel by said optical security detector 1.

In order to realize resonating waveguide grating elements 2 that outcouple two beams having each a very different central wavelength, such as a red beam having a wavelength of 620nm and a blue beam having a wavelength of 470nm and having both of these two outcoupled fractions travelling substantially towards the detection center 6a at least a third grating needs to be adapted in the elementary resonating waveguide gratings 2. Such third grating can for example be realized in-between said first grating 22 and said second grating 24 using advanced mastering techniques.

Each of said at least two resonating grating elements 2 have its longitudinal axis W which is substantially normal to the local section of the non-linear curve 50 as illustrated in Fig. 1, 4 and 5.

Said at least two resonating waveguide grating elements 2 have each less than 5 guided lightwave modes, preferably have each less than 4 guided modes, more preferably less than 3 guided modes. In a preferred embodiment, in order not to observe several waveguide modes in the said at least two resonating waveguide-gratings, composed of different spectral portion, the waveguiding layer is designed such that the at least two resonating waveguide-gratings are limited to a single mode in the visible range, this single mode being the fundamental waveguide mode, the waveguides being monomode. This improves the control of the appearance of the outcoupled light by limiting its different spectral components. Such optical design are less complex to engineer and predict.

It should be understood that in the case of monomode resonating waveguide-gratings, two different incoupled light beam portions travelling in opposite direction, , possibly having different central wavelengths A and spectral widths $\Delta\lambda$ are incoupled by two pairs 220, 240 of resonant waveguide gratings in the waveguiding layer. These two coupled modes travelling in opposite directions are not contradictory with the resonating waveguide gratings being monomode. In a preferred embodiment, the two coupled modes are fundamental modes of the resonating waveguide-gratings and of the waveguiding layer. As in the case of a multimode low-mode waveguide, one or more portions of incoupled light by a single grating pair 220 or 240 can propagate partially to at least one adjacent resonant waveguides grating element 2. However, the portion(s) travelling to another resonant waveguide grating element 2 will not necessary be redirected substantially towards the detection center by one grating pair.

Said outcoupled fraction 40c of said first incoupled portion and said outcoupled fraction 40d of said second incoupled portion have each a predetermined wavelength $\lambda$ and a predetermined spectral width $\Delta\lambda$. In order to obtain said predetermined wavelength and/or spectral width of each of said outcoupled fraction 40c and said outcoupled fraction 40d, the geometrical values of the structural elements of the resonating waveguide grating elements have to be determined, i.e.:

- the depth of the gratings;
- the period of the gratings;
- the thickness of the waveguiding layer;
- the materials and geometry of possible coatings arranged on said first, second, third and fourth gratings;
- the separation of said first 22 and second 24 gratings;
- the orientation of the gratings.

In a preferred embodiment, said predetermined wavelength $\lambda$ is comprised between 380nm and 1600 nm. The predetermined spectral width $\Delta\lambda$, defined relative to the half intensity of said outcoupled fractions 40a, 40b, is between 1nm and 100nm, preferably between 30nm and 80nm, more preferably between 40 nm and 60 nm .

In a preferred embodiment, illustrated in Fig. 4 the optical security device 1 comprises a plurality of resonating waveguide grating elements 2 which are arranged on a non-linear curve 50.

In an advantageous embodiment said non-linear curve 50 is a closed curve.

In an embodiment, illustrated in Fig. 4, said at least two resonating waveguide gratings are positioned on said curve 50 so that the incident light beams, provided by a light source positioned at said illumination center 4a, and incident on each of said first and second grating of each of said resonating waveguide grating element, provides an outcoupled light beam 400 which is directed to a detector 6 positioned at said detector center 6a. More precisely, for example, in the embodiment of Fig. 4, a light source 40 directs a light beam $40a_1$ on the first grating $22_1$, and a light beam $40bi$ on the second grating $22_1$ of a first resonating waveguide grating element 21. At least one the outcoupled portions $40c_1$ and $40d_1$ are directed to a detector positioned at said detector center. The position of the resonating waveguide elements 2 in the optical waveguide 20, the position of said illumination center 4a and said detector center 6a, the distance h between said midpoint 5 and the center 20d of said waveguide are chosen so that the outcoupled light beams of the color of interest from all resonating waveguide gratings positioned on said non-linear curve 50 are detected by a detector 6 positioned at said detector center 6a.

In order to achieve this, the coordinates of a set of confocal ellipsoids are calculated, as further described. Each of said confocal ellipsoids is defined by its two foci F1, F2 being the illumination center, and the detection center.

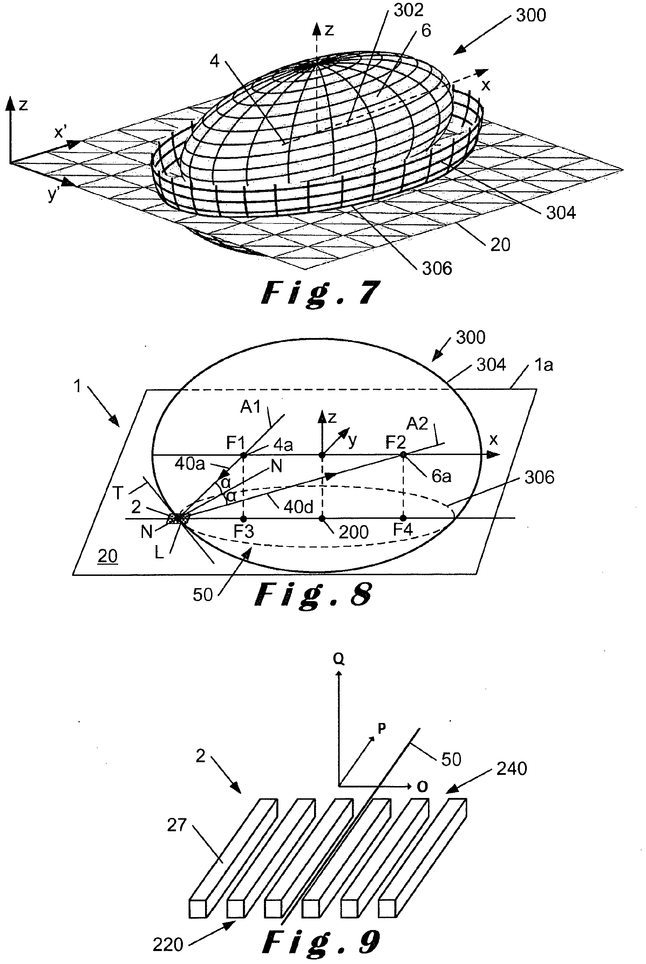

In an embodiment this set of ellipsoids is more specifically a set of confocal prolate spheroids 300, defined by three dimensional curves 302, 304 in space, as illustrated in Fig.7. The intersection between said set of confocal prolate spheroids 300 and the waveguiding layer 20 is computed. This intersection defines a set of curves 50 located in the waveguiding layer 20. An example of such a curve is illustrated in Fig.7 and is an ellipse 306. In Fig.7 the light source center 4 and the detector center 6 are located inside said set of confocal prolate spheroids 300 at their foci. Fig.8 illustrates a cross section of one of the spheroids 300 having said intersection 306 with the waveguiding layer 20. The cross section shows the location of the light source 4, the detector 6, the security device 100 and a single resonating waveguide grating element 2.

Fig.8 illustrates also an exemplary light ray 40a directed to an elementary waveguide grating element 2 positioned at a location L at the intersection of a spheroid 304 and said waveguiding layer. Fig.8 shows also the tangent plane T at said location L of said intersection to said spheroid 304 and the normal N to that tangent plane T. As illustrated in Fig.8, the focal points of said ellipse 306 are on the same axis as the projections of the foci of said spheroids, and are located substantially at these projections in the case of an outer spheroid.

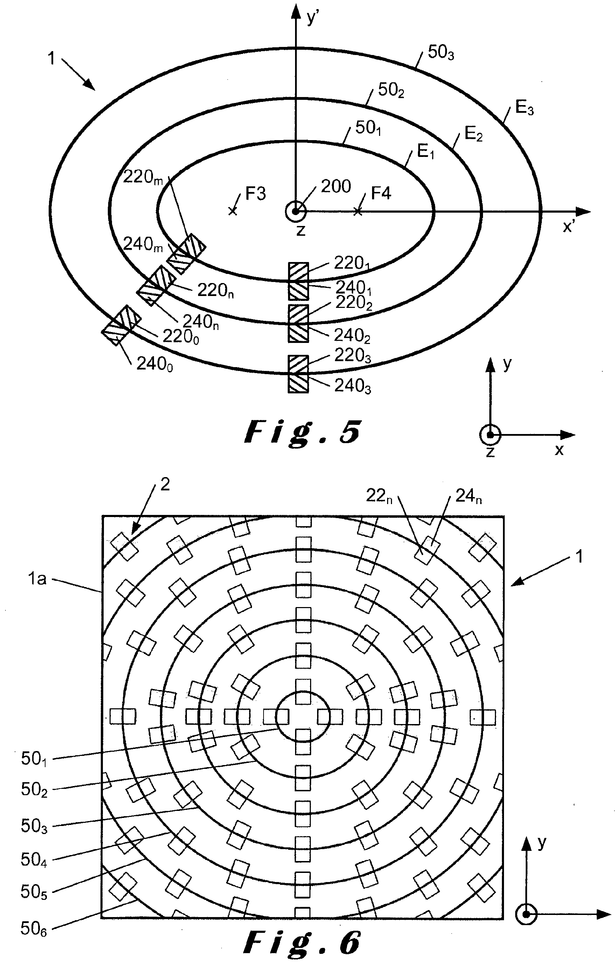

In the embodiment of a substantially planar security device 1, the waveguiding layer is substantially planar on a macroscopic scale and said intersection is more specifically a set of non-confocal ellipses. The foci of these ellipses are not unique for all curves 50 and are in the general case not the projection of the foci of the prolate spheroids parallel to said Z axis. For prolate spheroids having a half axis significantly larger than the distance between their foci F1, F2, the ellipses being their intersections with a planar waveguiding layer, have their foci F3, F4 located substantially at the projection, along the normal of the waveguiding layer plane, of the foci F1, F2 of the prolate spheroids. The ellipses are not all closed given that they are intersected by the finite area of the waveguiding layer, which is limited by a border 1a which is usually not elliptic. This is illustrated in Fig. 6.

In the embodiment of Fig. 7, the distance between the foci of the prolate spheroids - i.e. the distance between the illumination center 4a and the detection center 6 - is much greater than the distance to the waveguiding layer 20 so that all the cross sections in the X-Z plane of the prolate spheroids have an elliptical shape.

For consumer optoelectronic devices in which the source and detector are close, typically 10 to 20mm, to each other, the security device is designed with illumination center and detection centers located close to each other, for example 10mm apart, and the distance from the midpoint to the security device is preferably between 30 and 500mm for example 50mm. In such a case the prolate spheroids are close to spherical and the intersection curves between these prolate spheroids and a planar surface are ellipses close to concentric circles as shown in figure 6.

In the general case of a non-planar security device, the set of one-dimensional curves can contain both closed and open curves given the intersection with the finite surface of the security device. It is possible that all the one dimensional curves are open because of the intersection with the security devices, depending on its three dimensional shape.

The spacing between the confocal prolate spheroids and therefore between the adjacent one dimensional curve can be chosen depending of the resolution required for the security device, or depending of the size of the resonant waveguide grating elements.

By the fundamental property of said spheroids 300, the set of curves 50 has the property than for each location of the curves 50 of said set, the angle $\alpha$ between the local tangent T and the axis A1 defined between said location L and the illumination center 4a is equal to the angle between the local tangent T and the axis A2 between said location L and the detection center 6a.

By careful design of resonant waveguide grating elements 2, their longitudinal axis W passing through their centers 26 is preferably substantially perpendicular to the local curves 50. This allows to incouple predetermined incoupled portions in the waveguiding layer 20 so that most of the incoupled portions are travelling towards the second resonant waveguide grating of each pair 220, 240. This preferred configuration allows most of the incoupled portions to be outcoupled in each of the resonant waveguide grating elements 2. For example, an area of the optical security device 1 can be design with hundreds or thousands of resonant waveguide security elements redirecting yellow light to the detector, to be seen as a yellow part of an image in the case of an imaging detector such as a camera, while another area containing other resonant waveguide grating elements will redirect for example blue light, appearing as a blue pixel. A low amount of guided light portions will be exchanged between different resonant waveguide grating elements 2, usually adjacent ones and these portions will not be redirected towards the detector 6. Adjacent resonant waveguide grating elements 2 may direct different wavelength ranges to a detector 6 to appear as different colored pixels.

In an embodiment both incoupling and outcoupling gratings lines 27 are aligned parallel to the local tangent of the curves 50, their grating vector being perpendicular to the local tangent of the curves 50, and their grating vectors are different in length and the grating periods are different. Aligning the grating lines 27 parallel to the curves 50, as illustrated in Fig.9, allows an easier design of the master, with adjacent subwavelength grating lines parallel to each other, and usually an easier origination/mastering of the grating elements. In this configuration, most of the light incoupled by the surface of the first and second grating travelling in the resonant waveguide-grating layer is propagating towards the second grating elements, and not towards others grating elements located elsewhere on the security device surface, which improves the efficiency and reduced light being redirection in unwanted directions . In a preferred embodiment the grating lines 27 of a resonating waveguide element 2 are parallel to the tangent of the local section of the ellipse 50 on which this resonating waveguide element 2 is located. In order to incouple light in the resonating waveguide-gratings, the grating periods are typically smaller than the central wavelengths that is incoupled. The gratings periods are preferably between 20% and 200% of the central wavelength that is incoupled.

In a variant, the grating lines of the first grating pair 220 and the second grating pair 240 of an elements 2 are non-parallel and also each of said pairs 220, 240 is non parallel to the local tangent of the nonlinear curve 50 on which the resonant waveguide-grating element 2 is located. In this configuration, using the equations disclosed below, it is possible to design said first and second 220, 240 grating pair to have only one of the two light fractions outcoupled by either said first pair 220or said second pair 240 directed towards the detector center 6a. In such a configuration one of the outcoupled fractions is not propagating towards the detector center 6a.

In a variant, incoupled light by a first grating pair of a first resonating waveguide grating element 2 may be directed partially to a second grating pair and be also directed partially to a further grating pair of a further resonating waveguide grating element. Preferably said further resonating waveguide grating element is adjacent to said first resonating waveguide grating element 2 .

Particular imagining conditions may be obtained by specific arrangements of said elementary resonating waveguides 2 on said curves 50, and positioning a light source 4 at said illumination center 4a and a detector 6 at said detector center 6a, so that a bright image may be detected by a detector 6 at said detector center 6a. Said bright image comprises the information displayed by the colored and bright pixels of said security document 1. Each pixel may be realized by a grating element or a plurality of grating element. A primary color pixel may be obtained by one or a plurality of resonating waveguide grating elements 2 having substantially the same central wavelength, while secondary colors such as brown may be realized by a plurality of resonating waveguide grating elements 2 having a different central wavelength. In this case, the combination of the different redirected light beams can create the targeted spectrum or color. Said detector 6 may be for example an image detector of a portable phone or may be any type of detector, such as the human eye.

In an embodiment said light source 4 and detector 6 is the light source 4 and the image detector 6 of a portable phone device.

It is understood that when the optical security detector 1, the light source 4, the detector 6 and the resonating waveguide grating elements 2 are not arranged according to said particular imaging conditions as described above, the optical security device 1 is substantially transparent and its presence is difficult to be detected by a detector 6 , which may be the human eye or a CCD camera for example. In particular this is due to the fact that said substrate 10, said waveguiding layer 20 and said coating 30 are substantially transparent to visible and/or near infrared light. Only by positioning the optical security device 1 according to said particular geometric imaging conditions, said resonating grating elements 2 couples a portion of incident light in and out of said resonating grating elements 2 as described above, and only in these particular illumination conditions, the presence of the optical security element 2 may be noticed or detected, and the coded information included in its color pixels may be detected and analyzed.

In a preferred embodiment, illustrated in Fig. 5, at least two resonating waveguide gratings 2 are arranged on at least two non-intersecting curves 50, the center 26 of each of said plurality of resonating waveguide grating elements 2 being located on one of said at least two non-intersecting curves 50 .

Fig.6 illustrates an embodiment wherein an array of resonating waveguide grating elements 2 are arranged on an array of non-linear curves 50. In order to achieve said particular selective light redirection conditions, each of the plurality of resonating waveguide elements 2 is configured to direct outcoupled light from said first 22 and second 24 gratings towards a detector 6 so that an image may be detected of at least a portion of the area of the optical security device 1 comprising said plurality of resonating waveguide elements 2 .

In a preferred embodiment said at least two non-intersecting curves 50 are non-confocal elliptical curves.

In an embodiment said optical security device 1 has a substantially flat shape defined in a plane defined by said X-axis and a Y- axis defined perpendicular to said X-axis and said Z-axis. In this case, the non-intersecting curves 50 are a set of non-confocal elliptical curves.

In an embodiment said optical security device 1 has a curved shape defined by a polynome in the space defined by the orthonormal X-Y-Z axes, as illustrated in Fig.1.

In an embodiment said at least one of said non intersecting curves 50 is the intersection of a concentric ellipsoid with said waveguiding layer 20, the foci of said concentric ellipsoid being substantially said illumination center 4a, respectively substantially said detection center 6a.

In order to design effective security devices based on the principle of light redirection from one illumination center to a detection center using arrays of light-exchanging resonating waveguide-grating elements, the following equations are used in order to realize an predetermined and efficient design of the optical security element. We choose the example of a substantially transparent dielectric material for the waveguiding layer, similar equations can be derived for metallic waveguiding layer:

a) the diffraction equations of a light impinging on a 1D grating are the following, defined in an orthonormal space of axes O,P,Q. As illustrated in Fig. 9, P is the grating line axis, O the grating vector axis and Q the normal to the grating plane:

$$k_{o,m} = k n_{\text{clad}} \sin \theta_{inc} \cos \phi_{inc} - \text{m} \frac{2\pi}{\Lambda} \quad (1)$$

and

$$k_{p,m} = k n_{\text{clad}} \sin \theta_{inc} \sin \phi_{inc}, \qquad (2)$$

In equations (1) and (2) k is the wave-vector of said wavelength, $n_{\text{clad}}$ is the refractive index of the cladding material, $\theta_{inc}$ and $\phi_{inc}$ are the polar angles of the incident light beam in respect to the grating OPQ axis as illustrated in Fig. 9, $\theta_{inc}$ being the zenithal angle, defines equal to 0 when parallel to Z axis, $k_{o,m}$ and $k_{p,m}$ are wave-vector components (tangential to the waveguiding layer) of the m-th diffracted order, respectively.
b) The directions of the diffracted waves can be written as:

$$\theta_m = \tan^{-1} \left\{ \frac{\sqrt{k_{o,m}^2 + k_{p,m}^2}}{k_{q,m}} \right\},$$

$$\phi_m = \tan^{-1} \left\{ \frac{k_{p,m}}{k_{o,m}} \right\},$$

$$k_{q,m} = \sqrt{(k n_{core})^2 - k_{o,m}^2 - k_{p,m}^2},$$

where $k_{q,m}$ is the wave vector of the m-th diffracted order normal to the waveguiding layer.
c) The effective mode index inside the waveguide can be expressed as:

$$n_{eff} = n_{sup} \sin \theta - m \frac{\lambda}{\Lambda},$$

where $n_{sup}$ denotes the refractive index of the coating layer or of the substrate layer, $n_{sup}$ being the refractive index of the material of the layer through which the light is incident, $\theta$ denotes the incident angle, m denotes the diffraction order, $\lambda$ denotes the wavelength and $\Lambda$ denotes the period of the grating.
d) a guided mode can be excited if the effective index is in the range:

$$\max\{n_{sup}, n_{sub}\} \leq |n_{eff}| < n_{core},$$

where $n_{sub}$ denotes the refractive index of the coating layer or of the substrate layer, $n_{sub}$ being the refractive index of the material of the layer through which the light is not incident, $n_{core}$ being the refractive index of the waveguiding layer.

In the general case, both the substrate layer and coated layer have similar refractive index, approximated to a single cladding refractive index. Another condition that must be respected in order to have the guided-mode resonance is the phase-matching condition of a slab waveguide.
In the case of TE-polarization, this condition can be expressed as:

$$\tan \left( \frac{1}{2} (k n_{core} t \sin \phi - r\pi) \right) = \frac{\sqrt{n_{core}^2 \cos^2 \phi - n_{clad}^2}}{n_{core} \sin \phi},$$

wherein k is the wave-vector, t is the thickness of the waveguide, $\phi$ is the angle of the light-ray inside the waveguide and r is the waveguide mode.

It is possible to combine the last two equations, in order to make explicit the thickness dependence of the resonances (for the TE modes):

$$t = 2 \frac{\frac{r\pi}{2} + arctan \sqrt{\frac{n_{core}^2 - n_{clad}^2}{n_{core}^2 \cdot sin^2\left(arccos\frac{n_{clad} \cdot sin\,\theta + m\frac{\lambda}{\Lambda}}{n_{core}}\right)} - 1}}{\frac{2\pi}{\lambda} \cdot n_{core} \cdot sin\left(arccos\left(\frac{n_{clad} \cdot sin\,\theta + m\frac{\lambda}{\Lambda}}{n_{core}}\right)\right)}$$

In the case of TM polarization, the thickness dependence of the resonance regimes can be approximated by the following equation:

$$t = 2 \frac{\frac{r\pi}{2} + arctan \frac{n_{core} \cdot \sqrt{n_{core}^2 \cos^2\phi - n_{clad}^2}}{n_{clad}^2 \sin\left(arccos\left(\frac{n_{clad} \cdot sin\,\theta + m\frac{\lambda}{\Lambda}}{n_{core}}\right)\right)}}{\frac{2\pi}{\lambda} \cdot n_{core} \cdot sin\left(arccos\left(\frac{n_{clad} \cdot sin\,\theta + m\frac{\lambda}{\Lambda}}{n_{core}}\right)\right)}$$

- a prolate spheroid 300 is a quadric surface obtained by rotating an ellipse about its major axis. It can be described by the following equation:

$$\frac{x^2}{a^2} + \frac{y^2 + z^2}{b^2} = 1,$$

where (x,y,z) are the coordinates of the points on its surface and a and b are the major and minor semi-axes, respectively. This equation is valid when the prolate spheroid is centered at the origin of the axis, and has its semi-major axis lying on the x-axis in an orthonormal xyz space. In the other cases, it is possible to apply the transformation matrices for any rotation or translation, well known in the Euclidean geometry.

- the foci (focal points) of said prolate spheroid are placed in the following two points:

$$\left(x_f, y_f, z_f\right) = \left(\pm\sqrt{a^2 - b^2}, 0, 0\right).$$

The half distance between the two focal points can be expressed as:

$$f = \sqrt{a^2 - b^2}.$$

- a prolate spheroid confocal to the previous one can be found by incrementing, for example, its semi-major axis by a constant k:

$$\frac{x^2}{(a+k)^2} + \frac{y^2 + z^2}{(a+k)^2 - f^2} = 1.$$

In the case of a planar substrate, the section of this confocal prolate spheroid with a plane normal to the z-axis forms curves of non-confocal ellipses. Supposing that the substrate is distant h from the focal points, the equation of the non-confocal ellipses is given by:

$$\frac{x^2}{(a+k)^2 \cdot \left[1 - \frac{h^2}{(a+k)^2 - f^2}\right]} + \frac{y^2}{(a+k)^2 - f^2 - h^2} = 1,$$

wherein the first and the second denominators denote the squares of the semi-major and semi-minor axis of this non-confocal ellipses, respectively.

Given the central wavelength λ, the incoupling angles and the waveguide thickness, it is possible to obtain the grating period that satisfied the system by solving with numerical methods the equation of the thickness shown before.

In an embodiment of the optical security device, different interlaced sets of at least two resonating waveguide grating elements (2) having different illumination and/or detection centers. This may be realized for example by using pixelisation of the resonant waveguide elements at a microscopic scale. In a variant, each subset of at least two resonating waveguide grating elements may cover a portion of the whole reflective area of the optical security device 1. This can be realized for example to create hidden features to be controlled at specific positions or orientations or requiring specific equipment or equipment on which optical filters are mounted as hardware of software processing, such as colored Moire effects. This can also be used to create animation displaying different images when the position of the light source and/or the detector are changed. This can also be used designed to create images that can be controlled with a specific light polarization as the resonant waveguide grating elements can be designed to operate only for transverse electric (TE) or transverse magnetic (TM) polarizations or for both.

In an embodiment, said at least two resonating waveguide grating elements 2 have substantially identical shaped corrugated surfaces gratings 21 and 23, and have substantially identical shaped corrugated surfaces gratings 21 and 23. In a preferred case, the shape of grating 23 is substantially a translation of the surface grating 21 in the direction perpendicular to the plane of the waveguide 20, and the shape of grating 25 is substantially a translation of the surface grating 24 in the direction perpendicular to the plane of the waveguide 20. In this case, the outcoupled fractions of said incident light are redirected in both the detector center direction and its symmetric direction, to the opposite side of the waveguiding layer, as illustrated in Fig.4b. A fraction of the light is directed to a location S, located symmetric to the detection center 6a, symmetric being defined relative to the waveguiding layer 20. Specifically designed resonant waveguide grating profiles can outcouple light fractions in both the detection center 6 a and said location S.

It is possible to improve the optical efficiency of said optical security device 1 in the case of a substantially planar security device by placing a reflective layer in either the substrate layer 10 or the coating layer 30, on the layer opposite the layer through which the incident light is impeding, and this reflective layer should be located close to the waveguiding layer 20. This enables to reflect back light fractions propagated in the direction of said location in the direction of said the detection center 6a . The light reflected by such a reflective layer is impeding a second time on the waveguiding layer 20 and possibly on a structured resonant waveguide-grating area or on an unstructured area not comprising a grating. Said reflecting layer allows to obtain additional optical filtering and light filtering by incoupling and outcoupling in the grating elements 2 can be achieved. Reflected light that is not incoupled and redirected by the resonant waveguide grating elements 2, is directed towards the detector center, and is combined with outcoupled fractions provided by the resonating waveguide grating elements 2 directed to the detector center 60. This combination of outcoupled light beams directed to the detection center and outcoupled light beams directed to the symmetric of the detection center and reflected by the reflective layer can create optical interferences when the reflective layer is close to the waveguiding layer. The reflective layer is preferably made by a metallization layer, preferably a thin metal film deposited on a flat surface. The reflective layer makes the optical security features non transparent but its visibility is still low on a reflective packaging materials or reflective label.

It is also possible to designed resonant waveguide grating elements containing two or most stacked high refractive index waveguiding layers structurally correlated and cooperating coherently to incouple and outcouple broader spectra or more intense spectral line, such as disclosed in the document EP1775142

The security device disclosed here is not limited to implementation with visible light. The man skilled in the art can adapt the security device to be used with ultraviolet (UV) light and/or infrared (IR) light. UV and IR light are broadly used to control security device securing document and goods, such as in automated banknote controlling machines or in automated passport verification platform. In the later one for example, three images are taken with silicon based vision sensor having a broad spectral sensitivity around the visible wavelength range, the passport being illuminated with UV light, with white light and with IR light. The resonant waveguide grating elements can be adapted for example to incouple UV light and to redirect to patterns printed with fluorescent or phosphorescent inks located in the same layer or other layer, or be adapted with IR light with IR inks.

Additionally, the different resonant waveguide grating elements outcoupling the incoupled portion of the incident light can be considered as secondary light sources on the surface of the security device, originated from a single primary light source. These outcoupled beam can therefore be coherent between each other and diffraction patterns can be created around the detection center or in another spatial location above the security device. The different waveguide grating elements can be designed and positioned so that the light outcouple from adjacent elements are in phase or out of phase, to create constructive or destructive interference, so that the light detected by a detector can be homogenous or on the opposite exhibiting a diffraction pattern in one dimension or in two dimensions. The diffraction patterns observed will changed according to the position of the detector and can be used as an optical signature of a specific security device.

It is understood also that between elementary waveguide-grating elements positioned on a curve 50 and an adjacent curve, additional gratings may be arranged. These additional gratings may be used to create subtle color effects as only a small portion of the light coupled in the waveguide by said additional gratings will be transmitted and outcoupled to one of the adjacent elementary waveguide elements to said additional gratings.

In a variant, each elementary grating element may comprise to at least one side of its center 26 at least one additional grating element.

The invention is further achieved by an optical security control system 100, comprising:

- an optical security device 1 according to any one of the embodiments as described,;
- at least one light source 4 located at said illumination center 4a and adapted to provide, in operation, a light beam 40 illuminating a predetermined area of said optical security device 1,
- a detector 6 located at said detection center 6a and arranged to detect at least a reflected fraction of said light beam 40.

It is understood that the optical security control system 100 may be positioned so that said substrate layer 10 is to the side of said incident light beam. In a variant said coating layer 30 is positioned to the side of said incident light beam portion. The best integration or adaptation of the optical security device to a document or good to be secured will be chosen according to technological fabrication and assembly constraints.

In an embodiment of the optical security system, the optical security device 1 comprises alignments marks that can be recognize by an application, software or algorithm operated on the consumer opto-electronic device. Such alignment marks help the user to position the consumer opto-electronic device at the right position, both in height and in both lateral direction. It can help as well to put the consumer opto-electronic device in the right spatial orientation.

In an embodiment a physical spacer can be adapted to a consumer opto-electronic device to assure a precise distance of said light source 4 and said detector 6 relative to said waveguiding layer center 20d. Such a spacer can be a simple injection molded part to be mounted in the consumer opto-electronic device or a more complex device. For the goods that have to be secured, this physical spacer can be integrated to the security device of to the good packaging or the geometry of the goods can be used to that the opto-digital control will be executed at the right position.

The invention relates also to a product comprising an optical security device as described. An example of such a product is a credit card or an official document such as a passport.

The invention relates also to goods to be secured and which comprise an optical security device as describes. Examples of such goods are:

- an art or luxury object
- a watch
- a perfume
- any luxury good

- a wine or spirit bottle
- a container with chemical products
- tobacco and aerosol generating products or pharmaceutical products The cited examples are not limiting the possibilities of other goods to be secured

Exemple of an opto-digital authentication system according to the invention:

The optical security element of the invention as previously described may be used in combination with a light source and an optical detector to form an optical security system. A preferred embodiment for the light source and detector may comprise a commercially available smartphone having a digital camera comprising an optical sensor, in a preferred embodiment of at least 2 Megapixels, and a white flash, for example comprising one or several white LEDs, located close to the camera . The white flash and the camera thereby respectively form the illumination source and detector of the optical security system. Their distance is close to 10mm in current smartphone designs.

The security device of the example is designed to redirect light from the flash to the camera when the flash and camera are located at 50mm of the device. The surface of the optical security device is here chosen to be a planar surface, parallel to the smartphone backside.

Using the above mentioned equations, the resonating waveguide grating element centers 26 are positioned on the non-confocal ellipses as shown in Fig.6 The direction between the resonating waveguide grating element centers 26 is set perpendicular to the ellipses for all points of the surface.

The grating elements orientation and periods are computed according to the above mentioned equations so that each pair of grating elements is redirecting a given color range of the visible spectrum towards the camera of the smartphone, providing a colored pixel. By designing the pixels of the optical security device so that they are positioned appropriately on said non-confocal ellipses, a complete RGB image, a logo, text message, or a combination of them can be displayed on the camera image sensor and be acquired digitally.

In an alternative example, a smartphone application may be designed providing a visual frame on top of a real time image displayed by the smartphone rear camera to allow the user to align the smartphone in XYZ, pitch, roll and yaw to the designed control position and orientation, so that the flash and camera are located approximately in the designed illumination center and detection center respectively. By time-reciprocity of the light travel, the flash and camera position can be inverted by rotating the smartphone, the image being then captured by the rotated smartphone. Given the finite dimension of the flash and the outer lens of the camera of a smartphone, typically of a few millimeters, the XYZ positioning and the yaw of the smartphone to enable the control has typically a few millimeters tolerances, making a control in real condition convenient. The design of the security device may be made so that the effect of the pitch and roll of the smartphone is reduced.. Especially the smartphone can be rotated around the flash - camera axis for the control, as long as the security device stays in the field of view of the camera and field of illumination of the flash.

It is understood that the optical security device may be designed so as to reduce the required spatial orientation tolerances of said light source and detector relative to said optical security device or to increase them.

Additionally, image processing and recognition algorithms can be used to extract from the image acquired by the smartphone authentication and/or identification information, eventually giving a positive or negative control feedback. Such application can be connected to local database or remote database for identification purpose, pairing purpose, reporting information with date, time and location information to a central databank. It can as well comprise algorithms to control other type of security elements used on the same security device or other types of security devices.

Other typical consumer opto-electronic devices can be smart watches, smart glasses, tablets or other wearable electronic devices.

The optical security device described here can be integrated with other security features or devices, laterally or vertically. Other optically variable devices, security inks, identification elements such as unique code, keys or pairing codes can be adjacent to this device or be laminated on top or below part or the whole of this surface. Other optically variable devices can be integrated monolithically on the substrate layer to the optical security device described here, for example during the same step of structuration of the substrate layer. This security device being highly transparent at most angles and for most wavelengths, a preferred combination is when this security device object of this invention is on top of other security devices or features so that both this security device and another located below can be observed and controlled. In the case of a metallic waveguiding layer or of the presence of a reflective layer, the transparency of the optical security device described here is much lower but the visibility of the security device can remain low if surrounded by other reflective surfaces. Two or more security devices object of this invention can be stacked vertically, as disclosed in the document EP1814743 for homogenous resonant waveguide gratings called DIDs, or put adjacent to secure a document or a good, or put on different surface or different parts of a good to be secured.

**EP 3 205 512 B1**

**Claims**

1.  An optical security device (1) comprising:

    - a substrate layer (10);
    - a waveguiding layer (20) arranged on said substrate layer (10), said waveguiding layer (20) defining a first waveguide surface (201) on the substrate layer (10) and defining a second waveguide surface (203) opposite to said first waveguide surface 201;
    - a coating layer (30) arranged on said second waveguide surface 203;

    the waveguiding layer (20) comprising at least two resonating waveguide grating elements (2), each having less than four guided light wave modes and each comprising a first grating (22) and a second grating (24) in the first waveguide surface 201, a third grating (23) and a fourth grating (25) in the second waveguide surface (203), said third grating (23) facing said first grating (22) and said fourth grating (25) facing said second grating (24);
    said first grating (22) defining a first surface portion (20a) having a first center (22a) and the second grating (24) defining a second surface portion (20b) having a second center 24a, said first center (22a) and said second center 24a defining a longitudinal waveguide axis W, and a resonating waveguide grating element center (26) being defined halfway between said first center (22a) and said second center 24a,
    said first grating (22) and said third grating (23) being arranged to be in optical communication with said second grating (24) and said fourth grating (25) such that, upon illumination with a light source:

    - said first grating (22) and said third grating (23) couple into said resonating waveguide grating element (2) at least a first incoupled portion of a first incident light beam (40a), and so that said second grating (24) and said fourth grating (25) couple out of said resonating waveguide grating element (2) an outcoupled fraction (40c) of said at least a first incoupled portion;
    - said second grating (24) and said fourth grating (25) couple into said resonating waveguide grating element (2) at least a second incoupled portion of a second incident light beam (40b) and so that said first grating (22) and said third grating (23) couple out of said resonating waveguide grating element (2) an outcoupled fraction (40d) of said at least a second incoupled portion,
    - said outcoupled fractions (40c, 40d) of said at least a first and second incoupled portions each having a predetermined wavelength $\lambda$ and a predetermined spectral width $\Delta\lambda$

    **characterized in that**:

    - the optical security device (1) further comprises an illumination center (4a) and a detection center (6a), said detection center (6a) and said illumination center (4a) defining an X-axis,
    - the waveguiding layer (20) comprises a waveguiding layer center (200) being located closest to a midpoint (5) between said light source center (4a) and said detector center (6a), said waveguiding layer center (200) and said midpoint (5) defining a Z-axis, the normal to said X and Z axes passing through said midpoint (5) and defining an Y axis,

    a center (26) of each of said at least two resonating waveguide grating elements (2) is arranged on a first nonlinear curve (50), defined in the plane of said waveguiding layer (20) and away from said waveguiding layer center 200, **characterised in that** for each resonating waveguide element at least said outcoupled fraction (40c) of said at least first incoupled portion or said at least outcoupled fraction (40d) of said at least a second incoupled portion propagate towards said detector center (6a),

2.  The optical security device (1) according to claim 1, **characterized in that** at least one of said non intersecting curves is the intersection of one of a set of confocal prolate spheroids with said waveguiding layer (20), the foci of at least one of said set of confocal prolate spheroids being said illumination center (4a), respectively substantially said detection center (6a).

3.  The optical security device (1) according to claim 1 or 2, **characterized in that** at least one of said outcoupled fraction (40c) of said at least first incoupled portion or said at least outcoupled fraction (40d) of said at least a second incoupled portion is propagating in the fundamental mode of the waveguiding layer (20), and that the thickness of said waveguiding layer (20) is substantially homogenous on the area of the at least two resonating waveguide grating elements (2).

17

4. The optical security device (1) a according to any one of claims 1 to 3, **characterized in that** said predetermined wavelength λ is comprised between 380nm and 1600 nm and **in that** said predetermined spectral width Δλ defined relative to the full width half maximum of said outcoupled fractions (40a, 40b) is between 1nm and 100nm, preferably between 10nm and 80nm, more preferably between 15 nm and 60 nm .

5. The optical security device (1) according to any one of claims 1 to 4, **characterized in that** said first grating (22) and said second grating (24) are separated by a non-structured waveguide portion (20c).

6. The optical security device (1) according to any one of claims 1 to 5, **characterized in that** each resonating waveguide grating element (2) is a substantially transparent high refractive index dielectric waveguide grating element (2) or a metallic resonating waveguide grating element (2).

7. The optical security device (1) according to one of claims 1 to 6, **characterized in that** it comprises at least two further resonating waveguide grating elements (2) arranged on at least a second non-linear curve (50) not intersecting with said first non-linear curve (50), the center (26) of each of said further resonating waveguide grating elements (2) being located on said at least second non-linear curve (50).

8. The optical security device (1) according to claim 7, **characterized in that** said at least one of said outcoupled fractions 40c,40d of a plurality of resonating waveguide grating elements (2) are directed towards the detector center 6a.

9. The optical security device (1) according to any one of claims 1 to 8, **characterized in that** said optical security device (1) has a substantially flat shape defined in a plane parallel to the X-Y plane and that said at least first and second non-linear curves (50) are non-confocal elliptical curves.

10. The optical security device (1) according to any one of claims 1 to 9 **characterized in that** said optical security device (1) has a curved shape defined by a polynome in the space defined by said X-Y-Z axes.

11. The optical security device (1) according to any one of claims 1 to 10 **characterized in that** said optical security device (1) has at least two subsets of at least two resonating waveguide grating elements (2), **characterized in that** each subset of at least two resonating waveguide grating elements (2) have different illumination (4a) and/or detection (6a) centers, such as to create animated and/or multiple image effects.

12. An optical security control system (100), **characterized in that** it comprises:

   - an optical security device (1) according to any one of claims 1 to 11,
   - at least one light source (4) located at said illumination center (4a) and adapted to provide, in operation, a light beam (40) illuminating a predetermined area of said optical security device (1),
   - a detector (6) located at said detection center (6a) and being arranged to detect at least a reflected fraction of said light beam (40).

13. The optical security control system (100) according to claim 12 **characterized in that** said substrate layer (10) is positioned to the side of said incident light beam.

14. Optical security control system (100) according to claim 13 **characterized in that** said coating layer (30) is positioned to the side of said incident light beam.

15. Optical security control system (100) according to any one of claims 11 to 14 **characterized in that** it comprises at least one spacer adapted to set a precise distance of said light source (4) and said detector (6) relative to said waveguiding layer center (20d).

16. A product, in particular a document or a goods, **characterized in that** it comprises an optical security device according to any one of claims 1-11.

**Patentansprüche**

1. Optische Sicherheitsvorrichtung (1), umfassend:

- eine Substratschicht (10),
- eine wellenleitende Schicht (20), die auf der Substratschicht (10) angeordnet ist, wobei die wellenleitende Schicht (20) eine erste Wellenleiteroberfläche (201) auf der Substratschicht (10) definiert und eine zweite Wellenleiteroberfläche (203) gegenüber der ersten Wellenleiteroberfläche (201) definiert,
- eine Überzugsschicht (30), die auf der zweiten Wellenleiteroberfläche (203) angeordnet ist, wobei die wellenleitende Schicht (20) mindestens zwei resonante Wellenleitergitterelemente (2) umfasst, die jeweils weniger als vier geleitete Lichtwellenmoden aufweisen und jeweils ein erstes Gitter (22) und ein zweites Gitter (24) in der ersten Wellenleiteroberfläche (201), ein drittes Gitter (23) und ein viertes Gitter (25) in der zweiten Wellenleiteroberfläche (203) umfassen, wobei das dritte Gitter (23) dem ersten Gitter (22) zugewandt ist und das vierte Gitter (25) dem zweiten Gitter (24) zugewandt ist,

wobei das erste Gitter (22) einen ersten Oberflächenabschnitt (20a) mit einem ersten Zentrum (22a) definiert und das zweite Gitter (24) einen zweiten Oberflächenabschnitt (20b) mit einem zweiten Zentrum (24a) definiert, wobei das erste Zentrum (22a) und das zweite Zentrum (24a) eine Wellenleiter-Längsachse W definieren und ein Zentrum des resonanten Wellenleitergitterelements (26) auf halbem Weg zwischen dem ersten Zentrum (22a) und dem zweiten Zentrum (24a) definiert ist,
wobei das erste Gitter (22) und das dritte Gitter (23) derart angeordnet sind, dass sie in optischer Verbindung mit dem zweiten Gitter (24) und dem vierten Gitter (25) stehen, sodass bei Beleuchtung mit einer Lichtquelle:

- das erste Gitter (22) und das dritte Gitter (23) mindestens einen ersten eingekoppelten Abschnitt eines ersten einfallenden Lichtstrahls (40a) in das resonante Wellenleitergitterelement (2) einkoppeln, und sodass das zweite Gitter (24) und das vierte Gitter (25) einen ausgekoppelten Anteil (40c) des mindestens einen ersten eingekoppelten Abschnitts aus dem resonanten Wellenleitergitterelement (2) auskoppeln,
- das zweite Gitter (24) und das vierte Gitter (25) mindestens einen zweiten eingekoppelten Abschnitt eines zweiten einfallenden Lichtstrahls (40b) in das resonante Wellenleitergitterelement (2) einkoppeln, und sodass das erste Gitter (22) und das dritte Gitter (23) einen ausgekoppelten Anteil (40d) des mindestens einen zweiten eingekoppelten Abschnitts aus dem resonanten Wellenleitergitterelement (2) auskoppeln,
- wobei die ausgekoppelten Anteile (40c, 40d) des mindestens einen ersten und des mindestens einen zweiten eingekoppelten Abschnitts jeweils eine festgelegte Wellenlänge $\lambda$ und eine festgelegte spektrale Breite $\Delta\lambda$ aufweisen,

**dadurch gekennzeichnet, dass**:

- die optische Sicherheitsvorrichtung (1) ferner ein Beleuchtungszentrum (4a) und ein Erkennungszentrum (6a) umfasst, wobei das Erkennungszentrum (6a) und das Beleuchtungszentrum (4a) eine X-Achse definieren,
- die wellenleitende Schicht (20) ein Zentrum der wellenleitenden Schicht (200) umfasst, das sich am nächsten zu einem Mittelpunkt (5) zwischen dem Lichtquellenzentrum (4a) und dem Erkennungszentrum (6a) befindet, wobei das Zentrum der wellenleitenden Schicht (200) und der Mittelpunkt (5) eine Z-Achse definieren, wobei die Normale zu der X- und der Z-Achse durch den Mittelpunkt (5) verläuft und eine Y-Achse bildet,

ein Zentrum (26) der mindestens zwei resonanten Wellenleitergitterelemente (2) jeweils auf einer ersten nichtlinearen Kurve (50) angeordnet sind, die in der Ebene der wellenleitenden Schicht (20) und weg von dem Zentrum der wellenleitenden Schicht (200) definiert ist, **dadurch gekennzeichnet, dass** sich für jedes resonante Wellenleitergitterelement mindestens der ausgekoppelte Anteil (40c) des mindestens ersten eingekoppelten Abschnitts oder der mindestens ausgekoppelte Anteil (40d) des mindestens einen zweiten eingekoppelten Abschnitts zu dem Detektorzentrum (6a) hin ausbreitet.

2. Optische Sicherheitsvorrichtung (1) nach Anspruch 1, **dadurch gekennzeichnet, dass** mindestens eine der sich nicht schneidenden Kurven der Schnittpunkt eines von einer Gruppe von konfokalen gestreckten Sphäroiden mit der wellenleitenden Schicht (20) ist, wobei die Fokusse mindestens eines der Gruppe von konfokalen gestreckten Sphäroiden das mindestens eine Beleuchtungszentrum (4a) beziehungsweise im Wesentlichen das Erkennungszentrum (6a) sind.

3. Optische Sicherheitsvorrichtung (1) nach Anspruch 1 oder 2, **dadurch gekennzeichnet, dass** mindestens einer der ausgekoppelten Anteile (40c) des mindestens ersten eingekoppelten Abschnitts oder der mindestens ausgekoppelte Anteil (40d) des mindestens einen zweiten eingekoppelten Abschnitts sich in der Grundschwingung der wellenleitenden Schicht (20) ausbreitet und dass die Dicke der wellenleitenden Schicht (20) in dem Bereich der mindestens zwei resonanten Wellenleitergitterelemente (2) im Wesentlichen homogen ist.

4. Optische Sicherheitsvorrichtung (1) nach einem der Ansprüche 1 bis 3, **dadurch gekennzeichnet, dass** die festgelegte Wellenlänge λ zwischen 380 nm und 1600 nm liegt und dass die festgelegte spektrale Breite Δλ, die im Verhältnis zur Halbwertsbreite der ausgekoppelten Anteile (40a, 40b) definiert ist, zwischen 1 nm und 100 nm beträgt, vorzugsweise zwischen 10 nm und 80 nm, stärker bevorzugt zwischen 15 nm und 60 nm.

5. Optische Sicherheitsvorrichtung (1) nach einem der Ansprüche 1 bis 4, **dadurch gekennzeichnet, dass** das erste Gitter (22) und das zweite Gitter (24) durch einen nicht-strukturierten Wellenleiterabschnitt (20c) getrennt sind.

6. Optische Sicherheitsvorrichtung (1) nach einem der Ansprüche 1 bis 5, **dadurch gekennzeichnet, dass** jedes resonante Wellenleitergitterelement (2) ein im Wesentlichen transparentes dielektrisches Wellenleitergitterelement (2) mit hohem Brechungsindex oder ein metallisches resonantes Wellenleitergitterelement (2) ist.

7. Optische Sicherheitsvorrichtung (1) nach einem der Ansprüche 1 bis 6, **dadurch gekennzeichnet, dass** sie mindestens zwei weitere resonante Wellenleitergitterelemente (2) umfasst, die auf mindestens einer zweiten nichtlinearen Kurve (50) angeordnet sind, welche die erste nichtlineare Kurve (50) nicht schneidet, wobei sich das Zentrum (26) jedes der weiteren resonanten Wellenleitergitterelemente (2) auf der mindestens zweiten nichtlinearen Kurve (50) befindet.

8. Optische Sicherheitsvorrichtung (1) nach Anspruch 7, **dadurch gekennzeichnet, dass** mindestens einer der ausgekoppelten Anteile (40c, 40d) einer Mehrzahl von resonanten Wellenleitergitterelementen (2) auf das Detektorzentrum (6a) gerichtet ist.

9. Optische Sicherheitsvorrichtung (1) nach einem der Ansprüche 1 bis 8, **dadurch gekennzeichnet, dass** die optische Sicherheitsvorrichtung (1) eine im Wesentlichen flache Form aufweist, die in einer Ebene parallel zu der X-Y-Ebene definiert ist, und dass die mindestens erste und die mindestens zweite nichtlineare Kurve (50) nicht-konfokale elliptische Kurven sind.

10. Optische Sicherheitsvorrichtung (1) nach einem der Ansprüche 1 bis 9, **dadurch gekennzeichnet, dass** die optische Sicherheitsvorrichtung (1) eine gekrümmte Form aufweist, die durch ein Polynom in dem durch die X-Y-Z-Achsen definierten Raum definiert ist.

11. Optische Sicherheitsvorrichtung (1) nach einem der Ansprüche 1 bis 10, **dadurch gekennzeichnet, dass** die optische Sicherheitsvorrichtung (1) mindestens zwei Untergruppen von mindestens zwei resonanten Wellenleitergitterelementen (2) aufweist, **dadurch gekennzeichnet, dass** jede Untergruppe von mindestens zwei resonanten Wellenleitergitterelementen (2) unterschiedliche Beleuchtungs- (4a) und/oder Erkennungs-(6a) zentren aufweist, so dass animierte und/oder Mehrfachbildeffekte erzeugt werden.

12. Optisches Sicherheitskontrollsystem (100), **dadurch gekennzeichnet, dass** es Folgendes umfasst:

   - eine optische Sicherheitsvorrichtung (1) nach einem der Ansprüche 1 bis 11,
   - mindesten eine Lichtquelle (4), die sich im Beleuchtungszentrum (4a) befindet und dafür eingerichtet ist, in Betrieb einen Lichtstrahl (40) bereitzustellen, der einen festgelegten Bereich der optischen Sicherheitsvorrichtung (1) beleuchtet,
   - einen Detektor (6), der sich im Erkennungszentrum (6a) befindet und dafür angeordnet ist, mindestens einen reflektierten Anteil des Lichtstrahls (40) zu erkennen.

13. Optisches Sicherheitskontrollsystem (100) nach Anspruch 12, **dadurch gekennzeichnet, dass** die Substratschicht (10) seitlich des einfallenden Lichtstrahls positioniert ist.

14. Optisches Sicherheitskontrollsystem (100) nach Anspruch 13, **dadurch gekennzeichnet, dass** die Überzugsschicht (30) seitlich des einfallenden Lichtstrahls positioniert ist.

15. Optisches Sicherheitskontrollsystem (100) nach einem der Ansprüche 11 bis 14, **dadurch gekennzeichnet, dass** es mindestens einen Abstandshalter zum Einstellen einer präzisen Entfernung der Lichtquelle (4) und des Detektors (6) im Verhältnis zu dem Zentrum der wellenleitenden Schicht (20d) umfasst.

16. Produkt, insbesondere ein Dokument oder eine Ware, **dadurch gekennzeichnet, dass** es eine optische Sicherheitsvorrichtung nach einem der Ansprüche 1 bis 11 umfasst.

**Revendications**

1. Dispositif de sécurité optique (1) comprenant :

    - une couche de substrat (10) ;
    - une couche de guidage d'ondes (20) agencée sur ladite couche de substrat (10), ladite couche de guidage d'ondes (20) définissant une première surface de guide d'ondes (201) sur la couche de substrat (10) et définissant une deuxième surface de guide d'ondes (203) opposée à ladite première surface de guide d'ondes (201) ;
    - une couche de revêtement (30) agencée sur ladite deuxième surface de guide d'ondes (203) ;

    la couche de guidage d'ondes (20) comprenant au moins deux éléments de réseau de guide d'ondes résonnants (2), chacun ayant moins de quatre modes d'onde de lumière guidés et comprenant chacun un premier réseau (22) et un deuxième réseau (24) dans la première surface de guide d'ondes (201), un troisième réseau (23) et un quatrième réseau (25) dans la deuxième surface de guide d'ondes (203), ledit troisième réseau (23) faisant face audit premier réseau (22) et ledit quatrième réseau (25) faisant face audit deuxième réseau (24) ;
    ledit premier réseau (22) définissant une première partie de surface (20a) ayant un premier centre (22a) et le deuxième réseau (24) définissant une deuxième partie de surface (20b) ayant un deuxième centre (24a), ledit premier centre (22a) et ledit deuxième centre (24a) définissant un axe de guide d'ondes longitudinal W, et un centre d'élément de réseau de guide d'ondes résonnant (26) étant défini à mi-chemin entre ledit premier centre (22a) et ledit deuxième centre (24a),
    ledit premier réseau (22) et ledit troisième réseau (23) étant agencés de manière à être en communication optique avec ledit deuxième réseau (24) et ledit quatrième réseau (25) de sorte que, lors de l'éclairage avec une source de lumière

    - ledit premier réseau (22) et ledit troisième réseau (23) couplent dans ledit élément de réseau de guide d'ondes résonnant (2) au moins une première partie couplée en entrée d'un premier faisceau de lumière incident (40a), et de sorte que ledit deuxième réseau (24) et ledit quatrième réseau (25) couplent hors dudit élément de réseau de guide d'ondes résonnant (2) une fraction couplée en sortie (40c) de ladite au moins une première partie couplée en entrée ;
    - ledit deuxième réseau (24) et ledit quatrième réseau (25) couplent dans ledit élément de réseau de guide d'ondes résonnant (2) au moins une deuxième partie couplée en entrée d'un deuxième faisceau de lumière incident (40b) et de sorte que ledit premier réseau (22) et ledit troisième réseau (23) couplent hors dudit élément de réseau de guide d'ondes résonnant (2) une fraction couplée en sortie (40d) de ladite au moins une deuxième partie couplée en entrée,
    - lesdites fractions couplées en sortie (40c, 40d) desdites au moins une première et deuxième parties couplées en entrée ayant chacune une longueur d'onde $\lambda$ prédéterminée et une largeur spectrale $\Delta\lambda$ prédéterminée,

    **caractérisé en ce que** :

    - le dispositif de sécurité optique (1) comprend en outre un centre d'éclairage (4a) et un centre de détection (6a), ledit centre de détection (6a) et ledit centre d'éclairage (4a) définissant un axe X,
    - la couche de guidage d'ondes (20) comprend un centre de couche de guidage d'ondes (200) situé le plus près d'un point central (5) entre ledit centre de source de lumière (4a) et ledit centre de détecteur (6a), ledit centre de couche de guidage d'ondes (200) et ledit point central (5) définissant un axe Z, la normale auxdits axes X et Z passant par ledit point central (5) et définissant un axe Y,

    un centre (26) de chacun desdits au moins deux éléments de réseau de guide d'ondes résonnants (2) est agencé sur une première courbe non linéaire (50), définie dans le plan de ladite couche de guidage d'ondes (20) et éloignée dudit centre de couche de guidage d'ondes (200),
    **caractérisé en ce que**, pour chaque élément de guide d'ondes résonnant, au moins ladite fraction couplée en sortie (40c) de ladite au moins une première partie couplée en entrée ou ladite au moins une fraction couplée en sortie (40d) de ladite au moins une deuxième partie couplée en entrée se propage vers ledit centre de détecteur (6a).

2. Dispositif de sécurité optique (1) selon la revendication 1, **caractérisé en ce qu'**au moins l'une desdites courbes ne se croisant pas est l'intersection de l'un d'un ensemble de sphéroïdes allongés confocaux avec ladite couche de guidage d'ondes (20), le foyer d'au moins l'un dudit ensemble de sphéroïdes allongés confocaux étant ledit centre d'éclairage (4a), respectivement sensiblement ledit centre de détection (6a).

**3.** Dispositif de sécurité optique (1) selon la revendication 1 ou 2, **caractérisé en ce qu'**au moins l'une de ladite fraction couplée en sortie (40c) de ladite au moins une première partie couplée en entrée ou de ladite au moins une fraction couplée en sortie (40d) de ladite au moins une deuxième partie couplée en entrée se propage dans le mode fondamental de la couche de guidage d'ondes (20), et **en ce que** l'épaisseur de ladite couche de guidage d'ondes (20) est sensiblement homogène sur la zone desdits au moins deux éléments de réseau de guide d'ondes résonnants (2).

**4.** Dispositif de sécurité optique (1) selon l'une quelconque des revendications 1 à 3, **caractérisé en ce que** ladite longueur d'onde $\lambda$ prédéterminée est comprise entre 380 nm et 1600 nm et **en ce que** ladite largeur spectrale $\Delta\lambda$ prédéterminée définie par rapport à la largeur à mi-hauteur desdites fractions couplées en sortie (40a, 40b) est entre 1 nm et 100 nm, de préférence entre 10 nm et 80 nm, plus préférablement entre 15 nm et 60 nm.

**5.** Dispositif de sécurité optique (1) selon l'une quelconque des revendications 1 à 4, **caractérisé en ce que** ledit premier réseau (22) et ledit deuxième réseau (24) sont séparés par une partie de guide d'ondes non structurée (20c).

**6.** Dispositif de sécurité optique (1) selon l'une quelconque des revendications 1 à 5, **caractérisé en ce que** chaque élément de réseau de guide d'ondes résonnant (2) est un élément de réseau de guide d'ondes diélectrique à indice de réfraction élevé sensiblement transparent (2) ou un élément de réseau de guide d'ondes résonnant métallique (2).

**7.** Dispositif de sécurité optique (1) selon l'une des revendications 1 à 6, **caractérisé en ce qu'**il comprend au moins deux éléments de réseau de guide d'ondes résonnants (2) supplémentaires agencés sur au moins une deuxième courbe non linéaire (50) ne croisant pas ladite première courbe non linéaire (50), le centre (26) de chacun desdits éléments de réseau de guide d'ondes résonnants (2) supplémentaires étant situé sur ladite au moins une deuxième courbe non linéaire (50).

**8.** Dispositif de sécurité optique (1) selon la revendication 7, **caractérisé en ce que** ladite au moins une desdites fractions couplées en sortie (40c, 40d) d'une pluralité d'éléments de réseau de guide d'ondes résonnants (2) est dirigée vers le centre de détecteur (6a).

**9.** Dispositif de sécurité optique (1) selon l'une quelconque des revendications 1 à 8, **caractérisé en ce que** ledit dispositif de sécurité optique (1) a une forme sensiblement plate définie dans un plan parallèle au plan X-Y et **en ce que** lesdites au moins première et deuxième courbes non linéaires (50) sont des courbes elliptiques non confocales.

**10.** Dispositif de sécurité optique (1) selon l'une quelconque des revendications 1 à 9, **caractérisé en ce que** ledit dispositif de sécurité optique (1) a une forme incurvée définie par un polynôme dans l'espace défini par lesdits axes X-Y-Z.

**11.** Dispositif de sécurité optique (1) selon l'une quelconque des revendications 1 à 10, **caractérisé en ce que** ledit dispositif de sécurité optique (1) comporte au moins deux sous-ensembles d'au moins deux éléments de réseau de guide d'ondes résonnants (2), **caractérisé en ce que** chaque sous-ensemble d'au moins deux éléments de réseau de guide d'ondes résonnants (2) a des centres d'éclairage (4a) et/ou de détection (6a) différents, de manière à créer des effets d'images animées et/ou multiples.

**12.** Système de contrôle de sécurité optique (100), **caractérisé en ce qu'**il comprend :

- un dispositif de sécurité optique (1) selon l'une quelconque des revendications 1 à 11,
- au moins une source de lumière (4) située au niveau dudit centre d'éclairage (4a) et conçue pour fournir, en fonctionnement, un faisceau de lumière (40) éclairant une zone prédéterminée dudit dispositif de sécurité optique (1),
- un détecteur (6) situé au niveau dudit centre de détection (6a) et agencé pour détecter au moins une fraction réfléchie dudit faisceau de lumière (40).

**13.** Système de contrôle de sécurité optique (100) selon la revendication 12, **caractérisé en ce que** ladite couche de substrat (10) est positionnée du côté dudit faisceau de lumière incident.

**14.** Système de contrôle de sécurité optique (100) selon la revendication 13, **caractérisé en ce que** ladite couche de revêtement (30) est positionnée du côté dudit faisceau de lumière incident.

**15.** Système de contrôle de sécurité optique (100) selon l'une quelconque des revendications 11 à 14, **caractérisé en ce qu'**il comprend au moins un élément d'espacement conçu pour établir une distance précise de ladite source de lumière (4) et dudit détecteur (6) par rapport audit centre de couche de guidage d'ondes (20d).

**16.** Produit, en particulier un document ou des marchandises, **caractérisé en ce qu'**il comprend un dispositif de sécurité optique selon l'une quelconque des revendications 1 à 11.

**_F i g . 1a_**

**_F i g . 1b_**

*Fig.2*

*Fig. 3a*

*Fig. 3b*

*Fig. 3c*

*Fig. 4a*

*Fig. 4b*

*Fig. 5*

*Fig. 6*

**Fig. 7**

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012131239 A
- WO 2012131239 A1
- US 4426130 A
- WO 2015096859 A1
- WO 2015096859 A
- WO 2013060817 A
- EP 1775142 A
- EP 1814743 A